# EUROPÄISCHE PATENTSCHRIFT

(11) **EP 2 389 787 B1**
(45) Veröffentlichungstag und Bekanntmachung des Hinweises auf die Patenterteilung: **10.10.2012**
(21) Anmeldenummer: 10701496.1
(22) Anmeldetag: 18.01.2010
(51) Int. Cl.: H05B 6/12

(54) **KOCHFELD MIT ZUMINDEST EINER HEIZZONE AUS MEHREREN HEIZELEMENTEN**
HOB HAVING AT LEAST ONE HEATING ZONE HAVING SEVERAL HEATING ELEMENTS
PLAQUE DE CUISSON COMPORTANT AU MOINS UNE ZONE DE CHAUFFE COMPOSÉE DE PLUSIEURS ÉLÉMENTS DE CHAUFFE

(30) Priorität: 20.01.2009 ES 200900239
(43) Veröffentlichungstag der Anmeldung: 30.11.2011
(73) Patentinhaber: BSH Bosch und Siemens Hausgeräte GmbH, 81739 München (DE)
(72) Erfinder: ARTAL LAHOZ, Maria Carmen, E-50007 Zaragoza (ES); GARCIA JIMENEZ, Jose-Ramon, E-50009 Zaragoza (ES); GARDE ARANDA, Ignacio, E-50012 Zaragoza (ES); HERNANDEZ BLASCO, Pablo Jesus, E-50410 Cuarte de Huerva (Zaragoza) (ES); PALACIOS TOMAS, Daniel, E-50002 Zaragoza (ES); PEINADO ADIEGO, Ramon, E-50008 Zaragoza (ES); MILLAN SERRANO, Ignacio, E-50018 Zaragoza (ES)
(86) Internationale Anmeldenummer: PCT/EP2010/050520
(87) Internationale Veröffentlichungsnummer: WO 2010/084096

(56) Entgegenhaltungen:
- EP-A1- 1 868 417
- WO-A1-2004/014106
- WO-A1-2008/122495
- DE-A1-102004 003 126
- US-A- 3 989 916

## Beschreibung

Die Erfindung betrifft ein Kochfeld mit zumindest einer Heizzone aus mehreren Heizelementen nach dem Oberbegriff des Anspruchs 1 und ein Verfahren zum Betreiben eines solchen Kochfelds nach dem Oberbegriff des Anspruchs 12.

Aus der FR 2 863 039 A1 ist ein Induktionskochfeld mit einer Vielzahl von Induktoren bekannt, die in einem Raster angeordnet sind. Eine Steuereinheit detektiert Kochgeschirrelemente, die auf das Induktionskochfeld aufgestellt sind und definiert zu jedem Kochgeschirrelement eine Heizzone aus mehreren Heizelementen. Die Form, Größe und Position der Heizzone sind an die Form, Größe und Position des Kochgeschirrelements angepasst. Der Benutzer kann über eine Benutzerschnittstelle eine Heizleistung jeder der Heizzonen einstellen und die Steuereinheit betreibt die Heizelemente derart, dass die gewünschte Heizleistung gemäß einer vorgegebenen Heizleistungsverteilung auf die Heizelemente bzw. Induktoren verteilt wird.

Dazu bestimmt die Steuereinheit zu jedem Induktor der Heizzone einen Überdeckungsgrad. Der Überdeckungsgrad entspricht einem Anteil des Induktors, der von einem Boden des detektierten Kochgeschirrelements überdeckt wird. Die Heizleistungsverteilung erfolgt dann im Wesentlichen im Verhältnis der Überdeckungsgrade, so dass Induktoren am Rand der Heizzone, die nur unvollständig überdeckt sind, mit einer geringeren Heizleistung versorgt werden als vollständig überdeckte Induktoren. Dadurch werden Strahlungsverluste am Rand der Heizzone reduziert.

In der Praxis ist das aus der FR 2 863 039 A1 bekannte Verfahren sehr aufwändig. Aufgrund der reduzierten Heizleistung der Induktoren am Rand der Heizzone führt das Verfahren zudem zu einer inhomogenen Flächenheizleistung. Der Betrieb der Induktoren am Rand der Heizzone mit reduzierter Heizleistung führt ferner zu anteilig höheren Schalt- und Leitungsverlusten in Wechselrichtern des Induktionskochfelds, die einen hochfrequenten Heizstrom zum Betreiben der Induktoren erzeugen.

In großen Heizzonen mit vielen Heizelementen wird bei großen Heizleistungen eine verfügbare Heizleistung, die in der Regel durch die verfügbare Leistung im Haushaltsstromnetz begrenzt ist, auf alle Heizelemente verteilt. Wenn die Zahl der Heizelemente einen kritischen Wert übertrifft, können daher alle Heizelemente mit nur einem Bruchteil ihrer Maximalleistung betrieben werden. Die Schaltverluste und Ohmschen Verluste nehmen aber mit der Zahl der Heizelemente zu, so dass der Wirkungsgrad insgesamt reduziert wird.

Die Aufgabe der Erfindung besteht insbesondere darin, ein gattungsgemäßes Kochfeld mit einem höheren Wirkungsgrad auszustatten, wobei gleichzeitig eine homogene Flächenheizleistung erreichbar sein soll.

Die Aufgabe wird erfindungsgemäß durch die Merkmale der unabhängigen Patentansprüche gelöst, während vorteilhafte Ausgestaltungen und Weiterbildungen der Erfindung den Unteransprüchen entnommen werden können.

Die Erfindung insbesondere geht aus von einem Kochfeld mit zumindest einer Heizzone aus mehreren Heizelementen, einer Benutzerschnittstelle zum Einstellen einer Heizleistung der Heizzone und mit einer Steuereinheit zum Betreiben der Heizelemente und zum Verteilen der Heizleistung auf die Heizelemente gemäß einer Heizleistungsverteilung.

Es wird vorgeschlagen, dass die Steuereinheit dazu ausgelegt ist, die Heizleistungsverteilung abhängig von wenigstens einer Größe der Heizzone und/oder von der eingestellten Heizleistung zu bestimmen. Dadurch kann die gewählte Heizleistungsverteilung an die tatsächlichen Bedürfnisse angepasst werden, die in unterschiedlichen Heizleistungsbereichen sehr unterschiedlich sein können. Der Benutzer wünscht bei großen Werten der Heizleistung in der Regel ein schnelles Erhitzen des Kochgeschirrelements und dessen Inhalts. Daher sollten in diesem Fall Verlustleistungen so weit wie möglich reduziert werden, so dass ein großer Anteil der Nominalleistung des Kochfelds bzw. der Heizzone ausgenutzt werden kann. Ein Wirkungsgrad des Kochfelds bei der Einkopplung der Heizleistung in das Kochgeschirrelement sollte optimiert werden. Andererseits fällt bei geringeren Heizleistungen der Wirkungsgrad weniger ins Gewicht, so dass die Heizleistungsverteilung in diesem Fall nach der Maßgabe einer möglichst homogenen Flächenheizleistung gewählt werden kann.

Die Steuereinheit kann sowohl durch eine geeignete Software als auch durch eine geeignete Hardware zur erfindungsgemäßen Auswahl der Heizleistungsverteilung ausgelegt sein. Dazu kann die Steuereinheit beispielsweise einen Speicher mit verschiedenen Heizleistungsverteilungen umfassen. Alternativ oder ergänzend dazu kann in die Steuereinheit eine parametrische Funktion zum Bestimmen der Heizleistungsverteilung implementiert sein, die neben der Heizleistung auch von weiteren Parametern, insbesondere von der Größe und der Geometrie der Heizzone, abhängen kann.

Die Vorteile der Erfindung kommen insbesondere dann zum Tragen, wenn die Heizelemente Induktoren sind bzw. wenn das Kochfeld ein Induktionskochfeld ist. Die Heizleistung der Induktoren wird mit einer großen Unmittelbarkeit in das Kochgeschirrelement eingekoppelt und die schnellen Ansprechzeiten erlauben eine flexible Verteilung der Heizleistung auf die Induktoren.

In einer Weiterbildung der Erfindung wird vorgeschlagen, dass die Heizelemente in einem gleichmäßigen Raster angeordnet sind und dass die Steuereinheit dazu ausgelegt ist, ein Kochgeschirrelement zu detektieren und Heizelemente, die zumindest teilweise von dem Kochgeschirrelement überdeckt sind, zu einer Heizzone zusammenzufassen. In derartigen Matrix- oder Mikromodul-Kochfeldern ist die Frage der Heizleistungsverteilung von besonderer Relevanz für den Wirkungsgrad des Kochfelds, so dass hier besonders gro-βes Verbesserungspotenzial besteht.

Alternativ dazu kann die Erfindung auch in Kochfeldern eingesetzt werden, in denen die Heizelemente der Heizzone konzentrisch angeordnet sind, wobei wenigstens ein ringförmiges Heizelement wenigstens ein zentrales Heizelement umgibt.

Eine Konzentration der verfügbaren und in der Regel begrenzten Heizleistung des Kochfelds oder der Heizzone auf die wichtigsten Heizelemente mit dem höchsten Wirkungsgrad kann erreicht werden, wenn die Steuereinheit dazu ausgelegt ist, bei Heizleistungen unterhalb eines Schwellenwerts die Heizleistung auf eine größere Zahl von Heizelementen zu verteilen als bei Heizleistungen oberhalb des Schwellenwerts. Oberhalb des Schwellenwerts können Heizelemente, die nur mit hohen Verlusten betrieben werden können oder die zum Aufheizen des Kochgeschirrelements im Vergleich zu anderen Heizelementen wenig beitragen, abgeschaltet werden.

Da solche Heizelemente häufig am Rand angeordnet sind, wird zudem vorgeschlagen, dass die Steuereinheit dazu ausgelegt ist, bei Heizleistungen unterhalb des Schwellenwerts zusätzlich zu den für Heizleistungen oberhalb des Schwellenwerts verwendeten Heizelementen zumindest ein Heizelement zu betreiben, das an einem Rand der Heizzone angeordnet sind.

Eine weitere Konzentration der verfügbaren Heizleistung kann erreicht werden, wenn die Steuereinheit dazu ausgelegt ist, bei Heizleistungen unterhalb des Schwellenwerts zusätzlich zu den für Heizleistungen oberhalb des Schwellenwerts verwendeten Heizelementen zumindest ein Heizelement zu betreiben, das an zumindest drei Seiten von anderen Heizelementen der gleichen Heizzone umgeben ist.

Eine weitere Anpassung und Optimierung der Heizleistungsverteilung kann ermöglicht werden, wenn die Steuereinheit dazu ausgelegt ist, ein auf die Heizzone aufgestelltes Kochgeschirrelement zu detektieren und die Heizleistungsverteilung abhängig von der Größe und/oder dem Material des Kochgeschirrelements zu bestimmen.

Nach einem weiteren Aspekt der Erfindung wird vorgeschlagen, dass die Steuereinheit dazu ausgelegt ist, die Heizleistungsverteilung aus wenigstens zwei verschiedenen Heizleistungsverteilungen zu wählen.

Da bei sehr kleinen Heizzonen der Wirkungsgrad durch die Anpassung der Heizleistungsverteilung nur wenig verbessert werden kann, wird vorgeschlagen, dass die Steuereinheit dazu ausgelegt ist, die Heizleistungsverteilung nur dann abhängig von der eingestellten Heizleistung zu bestimmen, wenn die Heizzone wenigstens fünf Heizelemente umfasst. In diesen Fällen kann der zusätzliche Steuerungs- und Regelungsaufwand reduziert werden.

Eine zeitabhängige Heizleistungsverteilung kann realisiert werden, wenn die Steuereinheit dazu ausgelegt ist, in einer Aufheizphase eines Garvorgangs eine andere Heizleistungsverteilung zu verwenden als in wenigstens einer auf die Aufheizphase folgenden, zweiten Phase. In der zweiten Phase kann die Heizleistungsverteilung dann beispielsweise im Hinblick auf die homogene Flächenheizleistung optimiert werden.

Ein weiterer Aspekt der Erfindung betrifft ein Verfahren zum Betreiben eines Kochfelds mit zumindest einer Heizzone aus mehreren Heizelementen abhängig von einer über eine Benutzerschnittstelle des Kochfelds eingestellten Heizleistung, wobei die Heizleistung gemäß einer Heizleistungsverteilung auf die Heizelemente verteilt wird.

Es wird vorgeschlagen, dass die Heizleistungsverteilung abhängig von wenigstens einer Größe der Heizzone und/oder von der eingestellten Heizleistung bestimmt wird. Durch eine derartige Steuerung kann der Wirkungsgrad des Kochfelds insbesondere bei hohen Heizleistungen im Bereich einer Nominalleistung der Kochfelds verbessert werden.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Kochfeld mit einer Vielzahl von Heizelementen und einer Steuereinheit nach einer ersten Ausgestaltung der Erfindung,
- Fig. 2: die Heizelemente einer Heizzone des Kochfelds aus Figur 1 mit einer für geringe Heizleistungen verwendeten Heizleistungsverteilung,
- Fig. 3: die Heizelemente der Heizzone aus Figur 2 mit einer für höhere Heizleistungen verwendeten Heizleistungsverteilung,
- Fig. 4: die Heizelemente einer kleineren Heizzone des Kochfelds aus Figur 1 mit einer für geringe Heizleistungen verwendeten Heizleistungsverteilung,
- Fig. 5: die Heizelemente der Heizzone aus Figur 4 mit einer für höhere Heizleistungen verwendeten Heizleistungsverteilung,
- Fig. 6: eine Heizzone mit konzentrischen Heizelementen nach einer alternativen Ausgestaltung der Erfindung,
- Fig. 7: eine Brückenbräter-Heizzone in einem Kochfeld nach einer weiteren alternativen Ausgestaltung der Erfindung,
- Fig. 8: eine Bräter-Heizzone in einem Kochfeld nach einer weiteren alternativen Ausgestaltung der Erfindung,
- Fig. 9: eine Frequenzabhängigkeit einer Heizleistung für zwei verschiedene Heizleistungsverteilungen einer Heizzone und
- Fig. 10: eine Leistungsabhängigkeit eines Heizstroms für zwei verschiedene Heizleistungsverteilungen einer Heizzone.

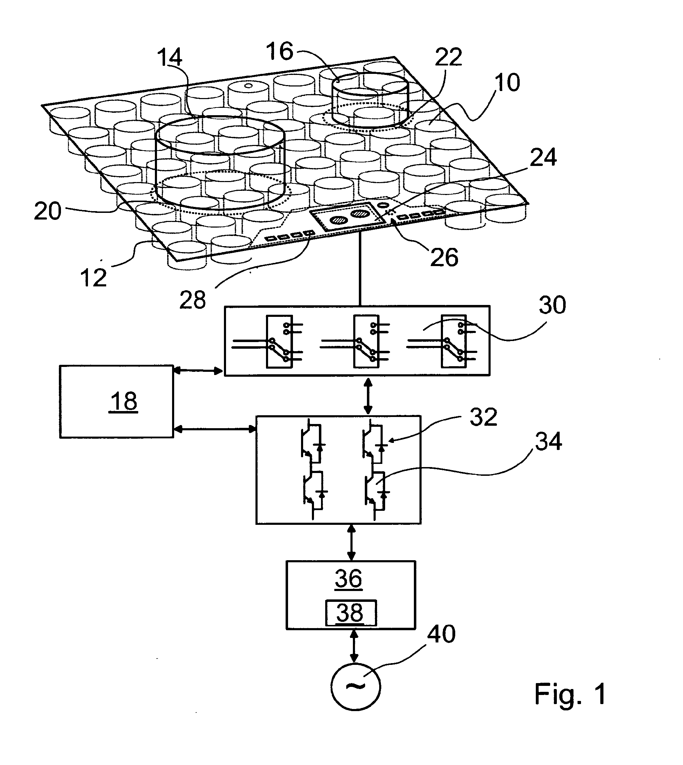

Figur 1 zeigt ein Kochfeld mit einer Vielzahl von Heizelementen und einer Steuereinheit 18 nach einer ersten Ausgestaltung der Erfindung. Die Heizelemente sind Induktoren 10, die in einem regelmäßigen zweidimensionalen Raster über die gesamte Fläche des Kochfelds verteilt sind.

Die Induktoren 10 sind von einer Abdeckplatte 12 aus Glas oder Glaskeramik bedeckt, auf welche Kochgeschirrelemente 14, 16 wie Kochtöpfe oder Pfannen aufgestellt werden können. Zum Detektieren der Kochgeschirrelemente 14, 16 erzeugt die Steuereinheit 18 niedervoltige Messströme, die die Induktoren 10 bzw. die Induktoren 10 umfassende Schwingkreise durchfließen. Wenn ein Kochgeschirrelement 14, 16 einen der Induktoren 10 ganz oder teilweise überdeckt, beeinflusst dies die Induktivität dieses Induktors 10. Dabei steht die Stärke der Veränderung der Induktivität in einem Zusammenhang mit dem Überdeckungsgrad. Ferner beeinflussen auch die Wirbelstromverluste in dem Boden des Kochgeschirrelements 14, 16 die Dämpfung des Schwingkreises. Die Steuereinheit 18 kann daher aus den Schwingungseigenschaften des Schwingkreises die Anwesenheit und den Überdeckungsgrad des Kochgeschirrelements 14, 16 bestimmen und ferner Rückschlüsse auf Materialeigenschaften des Kochgeschirrelements 14, 16 bzw. auf Materialeigenschaften von dessen Boden ziehen.

Nach der Detektion eines Kochgeschirrelements 14, 16 fasst die Steuereinheit 18 diejenigen Induktoren 10, die zu wenigstens einem bestimmten Überdeckungsgrad von dem Boden des Kochgeschirrelements 14, 16 überdeckt sind, zu einer in ihrer Größe, Form und Position an das Kochgeschirrelement 14, 16 angepassten Heizzone 20, 22 zusammen.

Das Kochfeld umfasst eine Benutzerschnittstelle 26 mit mehreren Stellelementen 28 und einem Display 24. Die in der oben beschriebenen Weise bestimmte Heizzone 20, 22 wird als Piktogramm, je nach der Form des Kochgeschirrelements 14, 16 beispielsweise als Kreis, Oval oder Rechteck, auf dem Display 24 dargestellt, so dass der Benutzer einen Überblick über die aktiven Heizzonen 20, 22 hat.

Über die Stellelemente 28 der Benutzerschnittstelle 26 kann der Benutzer abschließend für jede der Heizzonen 20, 22 eine Heizleistung einstellen. Dazu stellt der Benutzer eine Leistungsstufe ein, die beispielsweise ganz- und halbzahlige Werte zwischen 0 und 9 annehmen kann. Die Steuereinheit 18 rechnet die Leistungsstufe in eine Heizleistung um und betreibt die Induktoren 10 so, dass in den Induktoren 10 der betreffenden Heizzone 20, 22 insgesamt die gewünschte Heizleistung verbraucht wird.

Dazu verbindet die Steuereinheit 18 durch das Betätigen einer Schalteranordnung 30 die Induktoren 10 der Heizzone 20, 22 mit einem oder mehreren Wechselrichtern 32 einer Leistungselektronikbaugruppe des Kochfelds. Die Wechselrichter 32 umfassen unipolare Halbleiterschalter 34, die in dem Ausführungsbeispiel als Transistoren mit isolierter Gate-Elektrode (IGBT's) mit parallel geschalteter Diode ausgebildet sind. Die in einer Halbbrücken-Konfiguration angeordneten Halbleiterschalter 34 sind jeweils mit einem Pol eines Gleichrichters 36 verbunden, der über einen Filterschaltkreis 38 mit einer Phase 40 eines Haushaltsstromnetzes in Verbindung steht.

Der von den Wechselrichtern 32 erzeugte Heizstrom mit einer Frequenz, die ungefähr im Bereich zwischen 75 kHz und 100 kHz liegt, erzeugt in den Induktoren 10 ein schnell wechselndes Magnetfeld, das Wirbelströme in dem ferromagnetischen Boden des Kochgeschirretements 14, 16 verursacht. Die Wirbelströme erzeugen schließlich Wärme in diesem Boden. Die Frequenz des Heizstroms liegt oberhalb einer Resonanzfrequenz des den Induktor 10, einen hier nicht dargestellten Resonanzkondensator und den Boden des Kochgeschirrelements 14, 16 umfassenden Gesamtsystems. Mit zunehmender Frequenz können immer weniger Weiß'sche Bezirke in dem ferromagnetischen Boden des Kochgeschirrelements 14, 16 dem magnetischen Wechselfeld folgen, so dass die Leistungsdissipation und damit die Heizleistung abnimmt. Durch die Variation der Frequenz des Heizstroms kann daher die von den Induktoren 10 in den Boden des Kochgeschirrelements 14, 16 eingekoppelte Heizleistung von der Steuereinheit 18 eingestellt werden. Ferner kann die Steuereinheit 18 die Induktoren 10 periodisch ein- und ausschalten, um im zeitlichen Mittel eine bestimmte gewünschte Heizleistung zu erreichen.

Ausgehend von der aus der Eingabe in die Benutzerschnittstelle 26 bestimmten Heizleistung wählt die Steuereinheit 18 nun eine Heizleistungsverteilung. Diese Wahl hängt von der Größe der Heizzone 20, 22 bzw. des Kochgeschirrelements 14, 16, von den Materialeigenschaften des Bodens des Kochgeschirrelements 14, 16, von der Anzahl der zum Betreiben der Induktoren 10 der Heizzone 20, 22 verfügbaren Wechselrichter 32 und von der gewünschten Heizleistung ab. Die Heizleistungsverteilung legt den von den einzelnen Induktoren 10 verbrauchten Anteil an der Heizleistung der gesamten Heizzone 20, 22 fest. Im einfachsten Fall ist die Heizleistungsverteilung eine Gleichverteilung. Die Heizleistung wird dann durch die Anzahl der Induktoren 10 der Heizzone 20, 22 dividiert, um den Anteil jedes einzelnen Induktors zu berechnen.

In einer besonders vorteilhaften Ausgestaltung der Erfindung verteilt die Steuereinheit 18 bei Heizleistungen unterhalb eines Schwellenwerts die Heizleistung auf eine größere Zahl von Induktoren 10 als bei Heizleistungen oberhalb dieses Schwellenwerts.

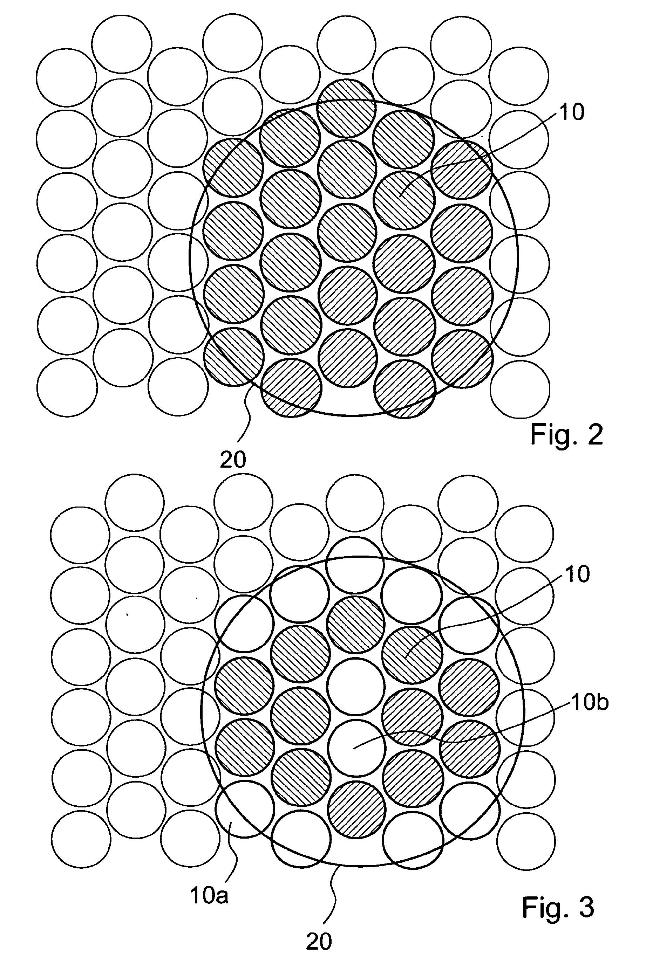

Figur 2 zeigt die Heizelemente einer Heizzone 20 des Kochfelds aus Figur 1 mit einer für geringe Heizleistungen verwendeten Heizleistungsverteilung. In dem in Figur 2 dargestellten Ausführungsbeispiel wird die Heizzone 20 von allen Induktoren 10 gebildet, die zu wenigstens 40 % von dem Kochgeschirrelement 14, 16 überdeckt sind. Wählt der Benutzer eine Heizleistung unterhalb des Schwellenwerts, werden alle Induktoren 10 der Heizzone 20 betrieben, um eine möglichst homogene Heizleistung zu erreichen. Die Heizleistung wird dann gleichmäßig auf alle Induktoren 10 der Heizzone 20 verteilt. Unterschiedliche Schraffuren deuten an, dass die betreffenden Induktoren 10 von unterschiedlichen Wechselrichtern 32 gespeist werden.

Figur 3 zeigt die Heizelemente der Heizzone 20 aus Figur 2 mit einer für höhere Heizleistungen verwendeten Heizleistungsverteilung. Für Heizleistungen oberhalb des Schwellenwerts werden ein Induktor 10 oder mehrere Induktoren 10a, 10b deaktiviert. Die aktiven Induktoren 10 sind schraffiert dargestellt und die deaktivierten Induktoren 10a, 10b als leere Kreise mit dickerer Randlinie. Die Steuereinheit 18 schaltet zumindest einen Induktor 10a ab, der an einem Rand der Heizzone 20 angeordnet ist. Für sehr große Heizzonen 20 schaltet die Steuereinheit 18 zudem zumindest einen Induktor 10a ab, der zumindest von drei Seiten von anderen Induktoren 10a der gleichen Heizzone 20 umgeben ist. Die Heizleistung wird dann auf die verbleibenden, aktiven Induktoren 10 zu gleichen Teilen verteilt.

Dadurch können einerseits Ohmsche Leitungsverluste und Streuverluste durch teilweise überdeckte Induktoren 10 am Rand der Heizzone 20 reduziert werden und andererseits können die verbleibenden Induktoren 10 mit einer geringeren Heizfrequenz betrieben werden, so dass in den Wechselrichtern 32 weniger Schaltvorgänge pro Zeit und damit ein geringerer Energieverbrauch realisiert werden kann. Die für die Schaltvorgänge notwendige Energie kann stark reduziert werden, weil die Wechselrichter 32 im Bereich der Resonanz der die Induktoren 10 umfassenden Schwingkreise betrieben werden können.

Die Steuereinheit 18 wählt daher je bei einem vorgegebenen Kochtopf mit einer bestimmten Position die Heizleistungsverteilung aus wenigstens zwei verschiedenen Heizleistungsverteilungen aus. Die Heizleistungsverteilung ist eine normierte Verteilungsfunktion, die prozentuale Anteile einzelner Induktoren an der Gesamtheizleistung der Heizzone 20 auswählt. Gemäß der ersten Heizleistungsverteilung wird die Heizleistung gleichmäßig auf alle Induktoren 10 verteilt und gemäß der zweiten Heizleistungsverteilung wird die Heizleistung nur auf einen Teil der Induktoren 10 gleichmäßig verteilt.

Wenn eine Heizzone weniger als fünf Heizelemente umfasst, wird die Heizleistung immer gleichmäßig auf die Heizelemente verteilt, da der zusätzliche Steuerungsaufwand in diesem Fall nicht gerechtfertigt wäre.

In einer alternativen Ausgestaltung der Erfindung ist die Steuereinheit 18 durch ein Zeiterfassungsmittel und eine geeignete Software dazu ausgelegt, in einer Aufheizphase eines Garvorgangs eine andere Heizleistungsverteilung zu verwenden als in wenigstens einer auf die Aufheizphase folgenden Phase. Insbesondere ist es denkbar, in der Aufheizphase, die etwa 2 Minuten dauern kann, einen anderen Schwellenwert zum Umschalten zwischen verschiedenen Heizleistungsverteilungen zu nutzen als nach dem Ende der Aufheizphase, so dass dieser Schwellenwert zeitabhängig gestaltet werden kann.

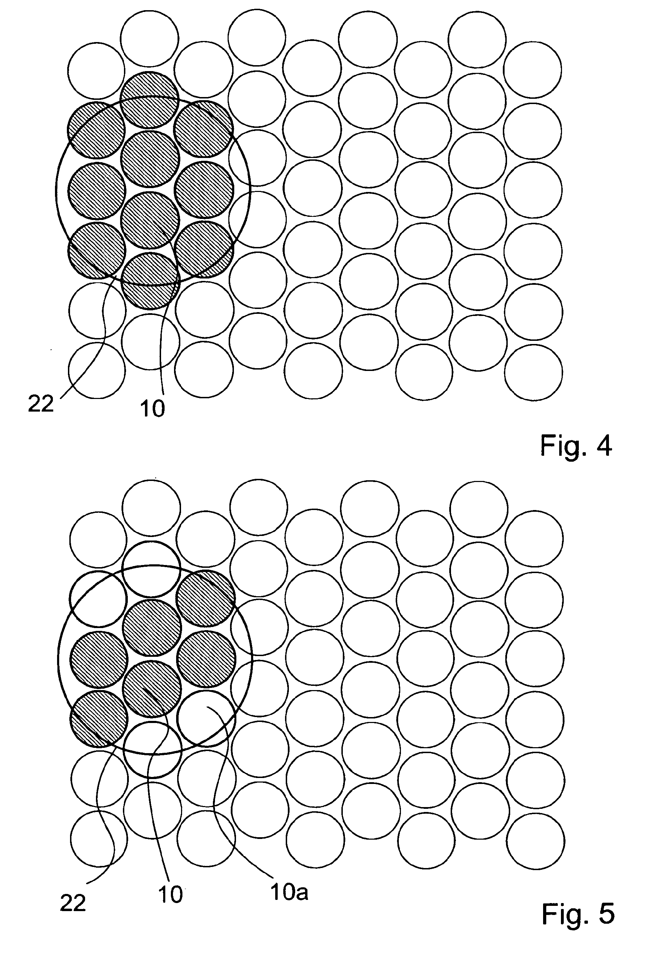

Figur 4 zeigt die Induktoren 10 einer kleineren Heizzone 22 des Kochfelds aus Figur 1 mit einer für geringe Heizleistungen verwendeten Heizleistungsverteilung, in der die Heizleistung gleichmäßig auf alle Induktoren 10 der Heizzone 22 verteilt wird.

Figur 5 zeigt die Heizelemente der Heizzone 22 aus Figur 4 mit einer für höhere Heizleistungen verwendeten Heizleistungsverteilung, in der vier am Rand der Heizzone 22 angeordnete Induktoren 10 abgeschaltet werden, um die übrigen Induktoren 10 mit einem höheren Wirkungsgrad betreiben zu können.

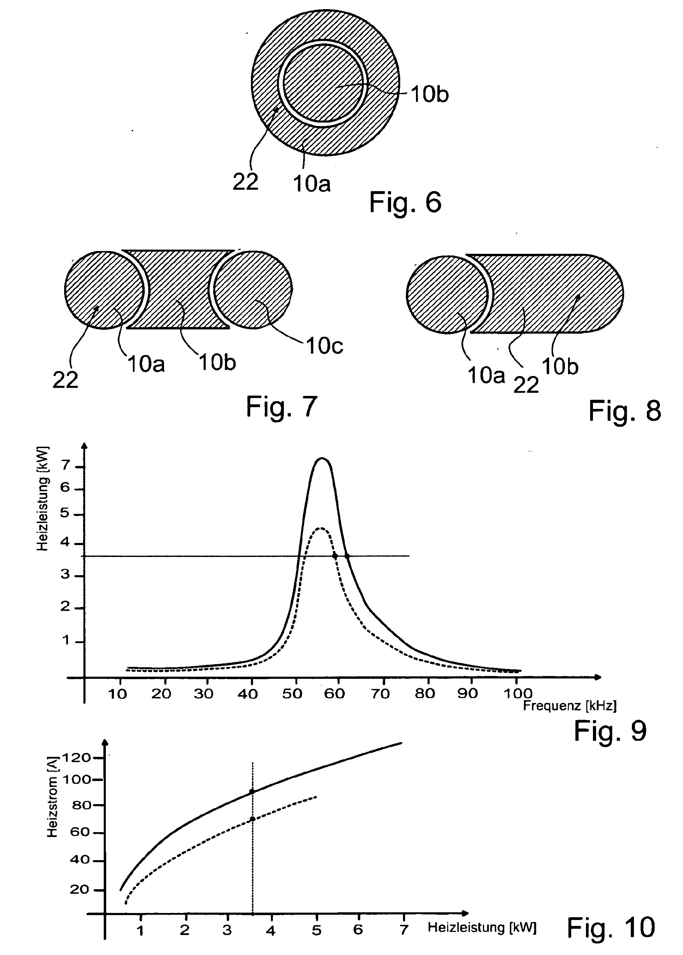

Figur 6 zeigt eine Heizzone 22 mit konzentrischen Induktoren 10 nach einer alternativen Ausgestaltung der Erfindung. Die Heizzone 22 umfasst zwei konzentrisch angeordnete Induktoren 10, wobei ein ringförmiger Induktor 10a einen zentralen, kreisförmigen Induktor 10b umgibt. Der äußere, ringförmige Induktor 10a wird bei größeren Töpfen zugeschaltet und bei erzeugt bei hohen Heizleistungen den größeren Teil der Heizleistung. Die Erfindung kann natürlich einfach auf Heizzonen mit drei oder mehr konzentrischen Heizelementen verallgemeinert werden.

Figur 7 zeigt eine Brückenbräter-Heizzone 22 in einem Kochfeld nach einer weiteren alternativen Ausgestaltung der Erfindung. Zwei runde Induktoren 10a, 10b können durch einen dritten Induktor 10c zu einer länglichen Heizzone 22 verbunden werden, die zum Beheizen eines großen Bräters nutzbar ist. Die Steuereinheit 18 dieses Kochfelds verteilt die Heizleistung abhängig von der detektieren Größe und Position des Bräters und von der eingestellten Leistungsstufe auf die Induktoren 10a, 10b, 10c.

Figur 8 zeigt eine Bräter-Heizzone 22 in einem Kochfeld nach einer weiteren alternativen Ausgestaltung der Erfindung. Ein runder Induktor 10a kann durch einen weiteren Induktor 10b zu einer länglichen Bräter-Heizzone 22 erweitert werden.

Figur 9 zeigt eine Frequenzabhängigkeit einer Heizleistung für zwei verschiedene Heizleistungsverteilungen einer Heizzone 20. Die obere, durchgezogene Linie entspricht einer Gleichverteilung auf alle Induktoren 10 in der in Figur 2 dargestellten Art und die untere, gestrichelte Linie entspricht einer Konzentration auf eine geringere Anzahl von Induktoren 10 in der in Figur 3 dargestellten Art. Es ist erkennbar, dass die gleiche Heizleistung mit einer geringeren Anzahl von Heizelementen bei einer geringeren Frequenz des Heizstroms erreicht werden kann. Die Frequenz liegt zudem näher an der Resonanzfrequenz des Systems, die dem Maximum der Kurven entspricht. Es ist daher erkennbar, dass durch das Deaktivieren einzelner Induktoren 10 die Schaltverluste reduziert werden können.

Figur 10 zeigt eine Leistungsabhängigkeit eines Heizstroms für zwei verschiedene Heizleistungsverteilungen einer Heizzone 20, 22. Bei gleicher Heizleistung sind bei der höheren Zahl von Induktoren 10 größere Stromwerte nötig, was zu größeren Ohmschen Verlusten in den Halbleiterschaltern 34 der Wechselrichter 32 führt.

Die Steuereinheit 18 ist eine universell programmierbare Recheneinheit, in die ein Verfahren zum Betreiben eines Kochfelds mit zumindest einer Heizzone 20, 22 aus mehreren Heizelementen implementiert ist. Der Betrieb erfolgt abhängig von einer über eine Benutzerschnittstelle 26 des Kochfelds eingestellten Heizleistung, wobei die Heizleistung gemäß einer Heizleistungsverteilung auf die Heizelemente verteilt wird und die Heizleistungsverteilung an die Heizleistung angepasst wird.

### Bezugszeichen

- 10: Induktor
- 10a: Induktor
- 10b: Induktor
- 10c: Induktor
- 12: Abdeckplatte
- 14: Kochgeschirrelement
- 16: Kochgeschirrelement
- 18: Steuereinheit
- 20: Heizzone
- 22: Heizzone
- 24: Display
- 26: Benutzerschnittstelle
- 28: Stellelement
- 30: Schalteranordnung
- 32: Wechselrichter
- 34: Halbleiterschalter
- 36: Gleichrichter
- 38: Filterschaltkreis
- 40: Phase

## Patentansprüche

1. Kochfeld mit zumindest einer Heizzone (20, 22) aus mehreren Heizelementen (10), einer Benutzerschnittstelle (26) zum Einstellen einer Heizleistung der Heizzone (20, 22) und mit einer Steuereinheit (18) zum Betreiben der Heizelemente (10) und zum Verteilen der Heizleistung auf die Heizelemente (10) gemäß einer Heizleistungsverteilung, wobei die Steuereinheit (18) dazu ausgelegt ist, die Heizleistungsverteilung wenigstens abhängig von der eingestellten Heizleistung zu bestimmen, **dadurch gekennzeichnet, dass** die Steuereinheit (18) dazu ausgelegt ist, bei Heizleistungen unterhalb eines Schwellenwerts die Heizleistung auf eine größere Zahl von Heizelementen (10) zu verteilen als bei Heizleistungen oberhalb des Schwellenwerts.

2. Kochfeld nach Anspruch 1, **dadurch gekennzeichnet, dass** die Heizelemente (10) Induktoren sind.

3. Kochfeld nach einem der vorhergehenden Ansprüche, **dadurch gekennzeichnet, dass** die Heizelemente (10) in einem gleichmäßigen Raster angeordnet sind und dass die Steuereinheit (18) dazu ausgelegt ist, ein Kochgeschirrelement (14, 16) zu detektieren und diejenigen Heizelemente (10), die zumindest teilweise von dem Kochgeschirrelement (14, 16) überdeckt sind, zu der Heizzone (20, 22) zusammenzufassen.

4. Kochfeld nach einem der Ansprüche 1 oder 2, **dadurch gekennzeichnet, dass** die Heizelemente der Heizzone (20, 22) konzentrisch angeordnet sind, wobei wenigstens ein ringförmiges Heizelement (10a) wenigstens ein zentrales Heizelement (10b) umgibt.

5. Kochfeld nach Anspruch 4, **dadurch gekennzeichnet, dass** die Steuereinheit (18) dazu ausgelegt ist, bei Heizleistungen unterhalb des Schwellenwerts zusätzlich zu den für Heizleistungen oberhalb des Schwellenwerts verwendeten Heizelementen (10) zumindest ein Heizelement (10b) zu verwenden, das an einem Rand der Heizzone (20, 22) angeordnet ist.

6. Kochfeld nach einem der vorhergehenden Ansprüche, **dadurch gekennzeichnet, dass** die Steuereinheit (18) dazu ausgelegt ist, bei Heizleistungen unterhalb des Schwellenwerts zusätzlich zu den für Heizleistungen oberhalb des Schwellenwerts verwendeten Heizelementen zumindest ein Heizelement zu verwenden, das an zumindest drei Seiten von anderen Heizelementen der gleichen Heizzone (20, 22) umgeben ist.

7. Kochfeld nach einem der vorhergehenden Ansprüche, **dadurch gekennzeichnet, dass** die Steuereinheit (18) dazu ausgelegt ist, ein auf die Heizzone (20, 22) aufgestelltes Kochgeschirrelement (14, 16) zu detektieren und die Heizleistungsverteilung abhängig von der Größe und/oder dem Material des Kochgeschirrelements (14, 16) zu bestimmen.

8. Kochfeld nach einem der vorhergehenden Ansprüche, **dadurch gekennzeichnet, dass** die Steuereinheit (18) dazu ausgelegt ist, die Heizleistungsverteilung aus wenigstens zwei verschiedenen Heizleistungsverteilungen zu wählen.

9. Kochfeld nach einem der vorhergehenden Ansprüche, **dadurch gekennzeichnet, dass** die Steuereinheit (18) dazu ausgelegt ist, die Heizleistungsverteilung nur dann abhängig von der eingestellten Heizleistung zu bestimmen, wenn die Heizzone (20, 22) wenigstens fünf Heizelemente (10) umfasst.

10. Kochfeld nach einem der vorhergehenden Ansprüche, **dadurch gekennzeichnet, dass** die Steuereinheit (18) dazu ausgelegt ist, in einer Aufheizphase eines Garvorgangs eine andere Heizleistungsverteilung zu verwenden als in wenigstens einer auf die Aufheizphase folgenden Phase.

11. Verfahren zum Betreiben eines Kochfelds mit zumindest einer Heizzone (20, 22) aus mehreren Heizelementen (10), abhängig von einer über eine Benutzerschnittstelle (26) des Kochfelds eingestellten Heizleistung, wobei die Heizleistung gemäß einer Heizleistungsverteilung auf die Heizelemente (10) verteilt wird, **dadurch gekennzeichnet, dass** die Heizleistungsverteilung abhängig von wenigstens einer Größe der Heizzone (20, 22) und/oder von der eingestellten Heizleistung bestimmt wird, wobei bei Heizleistungen unterhalb eines Schwellenwerts die Heizleistung auf eine größere Zahl von Heizelementen (10) verteilt wird als bei Heizleistungen oberhalb des Schwellenwerts.

## Claims

1. Cooker hob with at least one heating zone (20, 22) composed of a plurality of heating elements (10), a user interface (26) for setting a heating power of the heating zone (20, 22) and with a control unit (18) for operating the heating elements (10) and for distributing the heating power to the heating elements (10) in accordance with a heating power distribution, wherein the control unit (18) is designed for the purpose of determining the heating power distribution at least in dependence on the set heating power, **characterised in that** the control unit (18) is designed for the purpose of distributing the heating power to a greater number of heating elements (10) in the case of heating powers below a threshold value than in the case of heating powers above the threshold value.

2. Cooker hob according to claim 1, **characterised in that** the heating elements (10) are inductors.

3. Cooker hob according to any one of the preceding claims, **characterised in that** the heating elements (10) are arranged in a uniform grid and that the control unit (18) is designed for the purpose of detecting a cooking vessel element (14, 16) and combining those heating elements (10), which are covered at least partly by the cooking vessel element (14, 16), to form the heating zone (20, 22).

4. Cooker hob according to one of claims 1 and 2, **characterised in that** the heating elements of the heating zone (20, 22) are arranged concentrically, wherein at least one annular heating element (10a) surrounds at least one central heating element (10b).

5. Cooker hob according to claim 4, **characterised in that** the control unit (18) is designed for the purpose in the case of heating powers below the threshold value of using at least one heating element (10b), which is arranged at an edge of the heating zone (20, 22), additionally to the heating elements (10) used for heating powers above the threshold value.

6. Cooker hoc according to any one of the preceding claims, **characterised in that** the control unit (18) is designed for the purpose in the case of heating powers below the threshold value of using at least one heating element, which is surrounded at at least three sides by other heating elements of the same heating zone (20, 22), additionally to the heating elements used for heating powers above the threshold value.

7. Cooker hob according to any one of the preceding claims, **characterised in that** the control unit (18) is designed for the purpose of detecting a cooking vessel element (14, 16) placed on the heating zone (20, 22) and determining the heating power distribution in dependence on the size and/or the material of the cooking vessel element (14, 16).

8. Cooker hob according to any one of the preceding claims, **characterised in that** the control unit (18) is designed for the purpose of selecting the heating power distribution from at least two different heating power distributions.

9. Cooker hob according to any one of the preceding claims, **characterised in that** the control unit (18) is designed for the purpose of determining the heating power distribution in dependence on the set heating power only when the heating zone (20, 22) comprises at least five heating elements (10).

10. Cooker hob according to any one of the preceding claims, **characterised in that** the control unit (18) is designed for the purpose of using in a heating-up phase of a cooking process a heating power distribution which is different from that in at least one phase following the heating-up phase.

11. Method of operating a cooker hob with at least one heating zone (20, 22) composed of a plurality of heating elements (10), in dependence on a heating power set by way of user interface (26) of the cooker hob, wherein the heating power is distributed to the heating elements (10) in accordance with a heating power distribution, **characterised in that** the heating power distribution is determined in dependence on at least one magnitude of the heating zone (20, 22) and/or on the set heating power, wherein the heating power is distributed to a greater number of heating elements (10) in the case of heating powers below a threshold value than in the case of heating powers above the threshold value.

## Revendications

1. Plaque de cuisson comprenant au moins une zone de chauffe (20, 22) constituée de plusieurs élément de chauffe (10), une interface utilisateur (26) destinée à régler une puissance de chauffage de la zone de chauffe (20, 22) et comprenant une unité de commande (18) destinée à faire fonctionner les éléments de chauffe (10) et à répartir la puissance de chauffage sur les éléments de chauffe (10) selon une répartition de puissance de chauffage, l'unité de commande (18) étant conçue pour déterminer la répartition de puissance de chauffage au moins en fonction de la puissance de chauffage réglée, **caractérisée en ce que** l'unité de commande (18) est conçue, en cas de puissances de chauffage situées en dessous d'une valeur seuil, pour répartir la puissance de chauffage sur un plus grand nombre d'éléments de chauffe (10) qu'en cas de puissances de chauffage situées au-dessus de la valeur seuil.

2. Plaque de cuisson selon la revendication 1, **caractérisée en ce que** les éléments de chauffe (10) sont des inducteurs.

3. Plaque de cuisson selon l'une quelconque des revendications précédentes, **caractérisée en ce que** les éléments de chauffe (10) sont disposés en une trame régulière et **en ce que** l'unité de commande (18) est conçue pour détecter un élément d'ustensile de cuisson (14, 16) et pour regrouper vers la zone de chauffe (20, 22) les éléments de chauffe (10) qui sont au moins en partie recouverts par l'élément d'ustensile de cuisson (14, 16).

4. Plaque de cuisson selon l'une quelconque des revendications 1 ou 2, **caractérisée en ce que** les éléments de chauffe (10) de la zone de chauffe (20, 22) sont disposés de manière concentrique, au moins un élément de chauffe (10a) en forme d'anneau entourant au moins un élément de chauffe central (10b).

5. Plaque de cuisson selon la revendication 4, **caractérisée en ce que** l'unité de commande (18) est conçue pour utiliser, en cas de puissances de chauffage situées en dessous de la valeur seuil, au moins un élément de chauffe (10b) en plus des éléments de chauffe (10) utilisés pour les puissances de chauffage situées au-dessus de la valeur seuil, lequel est disposé sur un bord de la zone de chauffe (20, 22).

6. Plaque de cuisson selon l'une quelconque des revendications précédentes, **caractérisée en ce que** l'unité de commande (18) est conçue pour utiliser, en cas de puissances de chauffage situées en dessous de la valeur seuil, au moins un élément de chauffe en plus des éléments de chauffe utilisés pour les puissances de chauffage situées au-dessus de la valeur seuil, lequel est entouré sur au moins trois côtés par d'autres éléments de chauffe de la même zone de chauffe (20, 22).

7. Plaque de cuisson selon l'une quelconque des revendications précédentes, **caractérisée en ce que** l'unité de commande (18) est conçue pour détecter un élément d'ustensile de cuisson (14, 16) posé sur la zone de chauffe (20, 22) et pour déterminer la répartition de puissance de chauffage en fonction de la taille et/ou du matériau de l'élément d'ustensile de cuisson (14, 16).

8. Plaque de cuisson selon l'une quelconque des revendications précédentes, **caractérisée en ce que** l'unité de commande (18) est conçue pour sélectionner la répartition de puissance de chauffage à partir d'au moins deux répartitions de puissance de chauffage différentes.

9. Plaque de cuisson selon l'une quelconque des revendications précédentes, **caractérisée en ce que** l'unité de commande (18) est conçue pour déterminer la répartition de puissance de chauffage en fonction de la puissance de chauffage réglée seulement lorsque la zone de chauffe (20, 22) comprend au moins cinq éléments de chauffe (10).

10. Plaque de cuisson selon l'une quelconque des revendications précédentes, **caractérisée en ce que** l'unité de commande (18) est conçue pour utiliser, pendant une phase d'échauffement d'une opération de cuisson, une autre répartition de puissance de chauffage que pendant au moins une phase succédant à la phase d'échauffement.

11. Procédé de fonctionnement d'une plaque de cuisson comprenant au moins une zone de chauffe (20, 22) constituée de plusieurs éléments de chauffe (10), en fonction d'une puissance de chauffage réglée par l'intermédiaire d'une interface utilisateur (26) de la plaque de cuisson, la puissance de chauffage étant répartie sur les éléments de chauffe (10) selon une répartition de puissance de chauffage, **caractérisé en ce que** la répartition de puissance de chauffage est déterminée en fonction d'au moins une taille de la zone de chauffe (20, 22) et/ou de la puissance de chauffage réglée, la puissance de chauffage, en cas de puissances de chauffage situées en dessous d'une valeur seuil, étant répartie sur un plus grand nombre d'éléments de chauffe (10) qu'en cas de puissances de chauffage situées au-dessus de la valeur seuil.
